# FASCICULE DE BREVET EUROPEEN

(11) **EP 3 657 002 B1**
(45) Date de publication et mention de la délivrance du brevet: **11.08.2021**
(21) Numéro de dépôt: 19211422.1
(22) Date de dépôt: 26.11.2019
(51) Int. Cl.: F02K 9/44, B64G 1/40, F28D 7/02, F28D 7/00, F28D 9/04, F28D 9/00, F28D 21/00, F28F 1/02, F02K 9/48

(54) **SERPENTIN POUR ECHANGEUR THERMIQUE, ECHAPPEMENT DE TURBOPOMPE COMPRENANT UN SERPENTIN ET PROCEDE DE FABRICATION D'UN SERPENTIN**
WÄRMETAUSCHERSCHLANGE, TURBOPUMPENAUSLASS, DER EINE SOLCHE SCHLANGE UMFASST, UND HERSTELLUNGSVERFAHREN EINER SOLCHEN SCHLANGE
COIL FOR HEAT EXCHANGER, TURBOPUMP EXHAUST LINE COMPRISING A COIL AND METHOD FOR MANUFACTURING A COIL

(30) Priorité: 26.11.2018 FR 1871821
(43) Date de publication de la demande: 27.05.2020
(73) Titulaire: ArianeGroup SAS, 75015 Paris (FR)
(72) Inventeur: LUQUET, Nicolas, 27207 VERNON CEDEX (FR); ROBERT, Aurélien, 27207 VERNON CEDEX (FR)
(74) Mandataire: Cabinet Beau de Loménie

(56) Documents cités:
- WO-A1-94/16272
- WO-A1-2016/207923
- FR-A1- 2 998 333
- JP-A- S62 268 990

## Description

### Domaine technique

Le présent exposé concerne le domaine des échangeurs thermiques, en particulier des échangeurs thermiques comprenant un serpentin dans lequel circule un fluide.

### Technique antérieure

Il existe des échangeurs thermiques, tels par exemple qu'un échangeur thermique pour échappement de turbopompe de moteur de fusée.

Dans un échangeur thermique, de l'énergie thermique est prélevée d'un fluide A pour augmenter la température d'un fluide B ou faire changer d'état le fluide B. Inversement, lorsque le fluide A est à une température inférieure à la température du fluide B, le fluide A peut permettre de refroidir le fluide B. Les fluides A et B peuvent être des gaz et/ou des liquides. FR2998333 décrit un élément d'injection comprenant un serpentin.

De manière générale, lorsque l'on souhaite augmenter les échanges thermiques entre deux fluides, on augmente la surface d'échange entre les deux fluides. Cette surface d'échange peut être augmentée par exemple en augmentant la longueur d'un circuit, c'est-à-dire la longueur d'un conduit ou serpentin dans lequel circule un des deux fluides, en ajoutant des ailettes au conduit ou bien en ajoutant des cloisons permettant d'augmenter le chemin parcouru par un fluide.

De plus, pour des raisons d'encombrement, le conduit peut être plié en forme de « U » et/ou enroulé sur lui-même. Cela permet de réduire le volume occupé par le conduit pour une surface d'échange donnée.

Cependant, le cintrage du serpentin, c'est-à-dire la mise en forme du serpentin, peut s'avérer complexe.

Aussi, il existe un besoin pour un serpentin présentant un encombrement relativement faible par rapport à la surface d'échange et dont la mise en forme est facilitée.

### Exposé de l'invention

A cet effet, le présent exposé concerne un serpentin pour échangeur thermique, comprenant au moins une première spire et une deuxième spire, les première et deuxième spires étant adjacentes, chaque spire présentant, dans un plan de coupe transverse au sens d'écoulement d'un fluide dans le serpentin, une paroi délimitant une section de passage du fluide dans la spire, la section de passage ayant une forme comprenant un grand axe et un petit axe, une projection orthogonale d'une extrémité du grand axe de la première spire sur une droite comprenant le grand axe de la deuxième spire appartenant au grand axe de la deuxième spire, la première et la deuxième spire ayant une portion de paroi en commun.

Le grand axe est défini comme étant un segment de droite reliant deux points de la section de passage les plus éloignés l'un de l'autre.

Le petit axe est défini comme étant un segment de droite délimitant, dans deux spires adjacentes, un motif du serpentin, le motif du serpentin étant répété pour former les différentes spires. On comprend que chaque section de passage comprenant un grand axe et un petit axe, la section de passage n'est pas circulaire.

On comprend que deux spires adjacentes sont deux spires ayant une portion de paroi en commun.

Un tel serpentin peut être réalisé par fabrication additive sur lit de poudre. On comprend donc qu'en prenant comme plan horizontal le fond du bac contenant la poudre, le serpentin est réalisé de sorte que deux spires adjacentes sont disposées l'une au-dessus de l'autre selon une direction verticale. Ainsi, l'ordonnée d'un point le plus bas de la section de la spire supérieure est inférieure à l'ordonnée d'un point le plus haut de la section de la spire inférieure dans le plan vertical. On comprend que l'ordonnée est mesurée selon la direction perpendiculaire au plan horizontal, c'est-à-dire selon une direction verticale, l'origine étant dans le plan horizontal formant le fond du bac.

Deux spires adjacentes ayant une portion de paroi en commun, il est également possible de réduire la matière utilisée pour former le serpentin.

Par ailleurs, la portion de paroi en commun permet de fabriquer les spires sans avoir à utiliser des supports et permet de s'affranchir de la forme de goutte de la section de passage généralement utilisée en fabrication additive pour réaliser des cavités sans support.

De plus, l'utilisation de la fabrication additive sur lit de poudre pour la fabrication du serpentin permet de réaliser des serpentins qui seraient très difficiles, voire impossible à réaliser par cintrage d'un tube.

Dans certains modes de réalisation, le grand axe des première et deuxième spires sont parallèles entre eux.

Dans certains modes de réalisation, dans le plan de coupe transverse au sens d'écoulement d'un fluide dans le serpentin, la portion de paroi en commun entre les première et deuxième spires est inférieure ou égale à 30% de la paroi d'une spire, de préférence inférieure ou égale à 15% et supérieure ou égale à 5%, de préférence supérieure ou égale à 10%.

On comprend que la portion de paroi en commun est calculée entre deux spires adjacentes. La portion de paroi en commun que la deuxième spire pourrait avoir avec une troisième spire ne fait pas partie de la portion de paroi en commun entre la première spire et la deuxième spire.

Dans certains modes de réalisation, la portion de paroi en commun présente une épaisseur inférieure ou égale à une épaisseur d'une paroi d'échange.

On entend par paroi d'échange, une portion de la paroi qui permet de réaliser des échanges thermiques entre le fluide circulant dans le serpentin et le fluide circulant à l'extérieur du serpentin.

La portion de paroi en commun subit une pression de chaque côté de la paroi. En effet, la pression exercée par le fluide passant dans la première spire est similaire à la pression exercée par le fluide passant dans la deuxième spire, la différence étant due à la perte de charge du fluide dans le serpentin. Ainsi, les pressions subies de chaque côté de la portion de paroi en commun sont relativement équilibrées et permettent de réduire l'épaisseur de la portion de paroi en commun. Ainsi, l'épaisseur de la portion de paroi en commun est inférieure à l'épaisseur de la paroi d'échange. Aussi, l'épaisseur minimale de la paroi en commun est généralement liée à des contraintes de fabrication, par exemple, la taille de défauts critiques pouvant être présents dans la paroi en commun. En effet, cette paroi doit être continue et ne pas permettre le passage du fluide circulant dans le serpentin à travers la paroi en commun.

Dans certains modes de réalisation, l'épaisseur de la portion de paroi en commun est supérieure ou égale à 30% de l'épaisseur de la paroi d'échange, de préférence supérieure ou égale à 50%, de préférence supérieure ou égale à 70%, encore plus de préférence supérieure ou égale à 90% et inférieure ou égale à l'épaisseur de la paroi d'échange.

Dans certains modes de réalisation, la portion de paroi en commun est rectiligne.

Dans certains modes de réalisation, la portion de paroi en commun présente forme un angle supérieur ou égal à 0°, de préférence supérieur ou égal à 10°, de préférence supérieur ou égal à 20°, de préférence supérieur ou égal à 30, encore plus de préférence supérieur ou égal à 40° et inférieur ou égal à 50°, de préférence inférieur ou égal à 45°.

Dans certains modes de réalisation, la paroi est composée d'une pluralité de segments formant un contour fermé.

Dans certains modes de réalisation, la paroi présente au moins une paroi d'échange comprenant au moins un point de rebroussement.

Dans certains modes de réalisation, le serpentin comprend plusieurs enroulements concentriques.

On entend par enroulement, une partie du serpentin dans laquelle le serpentin est enroulé sur lui-même de sorte qu'une succession de spires adjacentes est formée, c'est-à-dire de spires ayant une portion de paroi en commun. Le fluide qui circule dans le serpentin parcourt toutes les spires formant un premier enroulement avant de parcourir les spires d'un deuxième enroulement, le premier et le deuxième enroulement faisant partie du même serpentin, c'est-à-dire que le premier et le deuxième enroulement sont reliés entre eux par une conduite formant une connexion entre le premier et le deuxième enroulement.

Dans certains modes de réalisation, le nombre d'enroulements concentriques est supérieure ou égal à 2, de préférence supérieur ou égale à 3.

Le présent exposé concerne également un échappement de turbopompe comprenant un serpentin tel que défini précédemment.

Le présent exposé concerne aussi un procédé de fabrication d'un serpentin pour échangeur thermique tel que défini précédemment, le procédé étant un procédé de fabrication additive sur lit de poudre.

La fabrication d'un serpentin par fabrication additive sur lit de poudre permet de réaliser un serpentin de forme complexe sans avoir à cintrer un tube.

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] est une vue partielle schématique en perspective d'un échappement de turbopompe comprenant un serpentin.
[Fig. 2] est une vue en coupe selon un plan de coupe transverse au sens d'écoulement d'un fluide dans un serpentin présentant une section de passage selon un mode de réalisation du présent exposé.
[Fig. 3A] présente de manière schématique un mode de réalisation alternatifs de la section de passage.
[Fig. 3B] présente de manière schématique un mode de réalisation alternatifs de la section de passage.
[Fig. 3C] présente de manière schématique un mode de réalisation alternatifs de la section de passage.
[Fig. 3D] présente de manière schématique un mode de réalisation alternatifs de la section de passage.
[Fig. 3E] présente de manière schématique un mode de réalisation alternatifs de la section de passage.

Sur l'ensemble des figures, les éléments en commun sont repérés par des références numériques identiques.

### Description détaillée

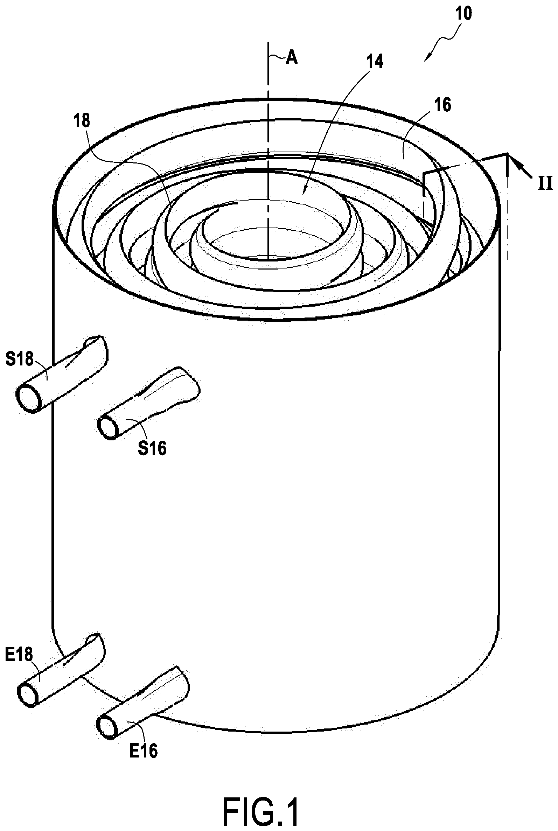

La figure 1 représente une vue partielle schématique en perspective d'un échappement 10 de turbopompe de moteur de fusée comprenant une paroi 12 délimitant un volume 14 dans lequel sont disposés deux serpentins 16, 18.

Un premier fluide circule dans le premier serpentin 16 entre une première entrée E16 et une première sortie S16, un deuxième fluide circule dans le second serpentin 18 entre une deuxième entrée E18 et une deuxième sortie S18 et un troisième fluide circule dans le volume 14, par exemple de haut en bas selon la représentation de la figure 1.

Par exemple, les premier et deuxième fluides peuvent être un ergol liquide et/ou un gaz permettant de maintenir sous pression un réservoir d'ergols liquides d'un moteur de fusée et le troisième fluide peut être un gaz de combustion du moteur de fusée (échappement d'une chambre annexe ou de la chambre principale). Par échange thermique entre le gaz d'échappement et les premier et deuxième au travers des premier et deuxième serpentins 16, 18, les premier et deuxième fluides sont réchauffés grâce au troisième fluide circulant dans le volume 14 et, dans l'exemple, les premier et deuxième fluides peuvent potentiellement changer d'état physique (passage de l'état liquide à l'état gazeux).

Notamment dans le domaine des moteurs de fusée, l'encombrement est un paramètre important. Afin d'augmenter la surface d'échange entre les deux fluides, la longueur du premier serpentin 16 est augmentée et le premier serpentin 16 est enroulé sur lui-même afin de ne pas augmenter l'encombrement proportionnellement à la longueur du premier serpentin 16. Sur la figure 1, on constate que le premier serpentin 16 est enroulé sur lui-même selon une direction axiale A et forme également une pluralité d'enroulements concentriques selon une direction perpendiculaire à la direction axiale A. Il en va de même pour le deuxième serpentin 18.

Ainsi, même lorsque les débits des fluides dans et autour du premier serpentin 16 sont très élevés, par exemple le premier fluide circulant dans le premier serpentin 16 peut être de l'oxygène liquide circulant en entrée dans le premier serpentin 16 à un débit de 1,6 kg/s (kilogramme par seconde) d'oxygène liquide, la surface d'échange entre les premier et troisième fluides est suffisamment importante pour que le transfert de chaleur du troisième fluide soit réalisé vers le premier fluide. Dans cet exemple, l'oxygène liquide prélevé dans le réservoir est transformé, dans le premier serpentin 16, en oxygène gazeux et est injecté dans le ciel gazeux du réservoir d'oxygène liquide.

On comprend que la réalisation d'un tel premier serpentin 16 par cintrage d'un tube serait très complexe à réaliser.

De manière similaire, le deuxième fluide circulant dans le deuxième serpentin 18 peut être du méthane circulant en entrée dans le deuxième serpentin 18 à un débit de 600 g/s (gramme par seconde) de méthane liquide, la surface d'échange entre les deuxième et troisième fluides est suffisamment importante pour que le transfert de chaleur du troisième fluide soit réalisé vers le deuxième fluide. Dans cet exemple, le méthane liquide est transformé, dans le deuxième serpentin 18 en méthane gazeux et est injecté dans le ciel gazeux du réservoir d'hydrogène liquide.

On comprend que la réalisation des premier et deuxième serpentins 16, 18 par cintrage serait très complexe à réaliser.

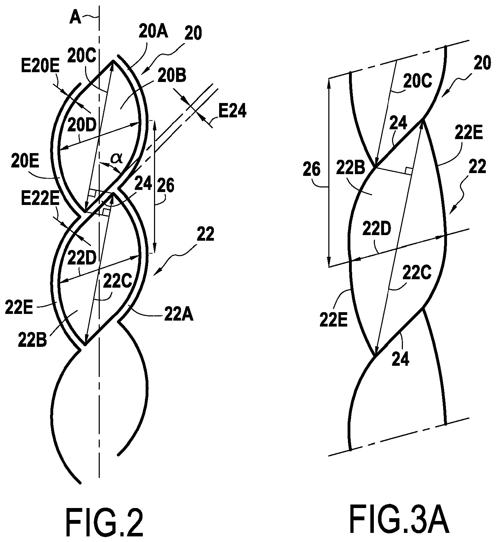

La figure 2 représente une vue en coupe, selon le plan de coupe II-II de la figure 1, d'une première spire 20 et d'une deuxième spire 22 du premier serpentin 16 de la figure 1. La première spire 20 est adjacente à la deuxième spire 22. Le plan de coupe II-II de la figure 1 correspond à un plan de coupe transverse au sens d'écoulement du premier fluide dans le premier serpentin 16.

Dans le plan de coupe transverse au sens d'écoulement du premier fluide dans le premier serpentin 16, la première spire 20 est délimitée par une première paroi 20A qui délimite une première section de passage 20B du premier fluide dans le premier serpentin 16. La première section de passage 20B présente un grand axe 20C et un petit axe 20D. Le grand axe 20C est défini comme un segment de droite reliant deux points de la première section de passage 20B les plus éloignés l'un de l'autre.

Dans le mode de réalisation de la figure 2, le petit axe 20D n'est pas perpendiculaire au grand axe 20C.

De même, dans le plan de coupe transverse au sens d'écoulement du premier fluide dans le premier serpentin 16, la deuxième spire 22 est délimitée par une deuxième paroi 22A qui délimite une deuxième section de passage 22B du premier fluide dans le premier serpentin 16. La deuxième section de passage 22B présente un grand axe 22C et un petit axe 22D. Le grand axe 22C est défini comme le segment de droite reliant deux points de la deuxième section de passage 22B les plus éloignés l'un de l'autre.

Dans le mode de réalisation de la figure 2, le petit axe 22D n'est pas perpendiculaire au grand axe 22C.

Dans le mode de réalisation de la figure 2, la première section de passage 20B et la deuxième section de passage 22B sont identiques.

La première paroi 20A de la première section de passage 20B et la deuxième paroi 22A de la deuxième section de passage 22B présentent une portion de paroi en commun 24. La première paroi 20A et la deuxième paroi 22A présentent chacune une paroi d'échange 20E, 22E. On entend par paroi d'échange 20E, 22E, une portion de la paroi 20A, 22A, qui permet de réaliser des échanges thermiques entre le premier fluide circulant dans le premier serpentin 16 et le troisième fluide circulant à l'extérieur du premier serpentin 16, c'est-à-dire autour du premier serpentin 16.

On comprend que la première spire 20 et la deuxième spire 22 étant adjacentes, le fluide qui parcourt le premier serpentin 16 passe successivement dans la première section de passage 20B et la deuxième section de passage 22B ou alternativement passe successivement dans la deuxième section de passage 22B et ensuite dans la première section de passage 20B.

Comme représenté sur la figure 2, la projection orthogonale d'une extrémité du grand axe 20C de la première spire 20 sur une droite comprenant le grand axe 22C de la deuxième spire 22 appartient au grand axe 22C de la deuxième spire 22. Ainsi, la projection de l'extrémité du grand axe 20C de la première spire 20 sur le grand axe 22C de la deuxième spire 22, perpendiculairement au grand axe 22C de la deuxième spire 22, est comprise entre les deux extrémités du grand axe 22C de la deuxième spire 22.

Inversement, la projection orthogonale d'une extrémité du grand axe 22C de la deuxième spire 22 sur une droite comprenant le grand axe 20C de la première spire 20 appartient au grand axe 20C de la première spire 20. Ainsi, la projection de l'extrémité du grand axe 22C de la deuxième spire 22 sur le grand axe 20C de la première spire 20, perpendiculairement au grand axe 20C de la première spire 20, est comprise entre les deux extrémités du grand axe 20C de la première spire 20.

Le petit axe 20D de la première spire 20 est défini comme un segment de droite délimitant avec le petit axe 22D de la deuxième spire 22, adjacente à la première spire 20, un motif 26 du premier serpentin 16.

Le premier serpentin 16 est construit en répétant, dans le sens d'empilement des spires, le motif 26.

On comprend que le premier serpentin 16 pourrait présenter des spires ne présentant pas le motif 26. En particulier, mais pas uniquement, le serpentin 16 peut ne pas présenter ce motif 26 lors du passage d'un premier enroulement à un deuxième enroulement.
Dans le mode de réalisation de la figure 2, le grand axe 20C de la première spire 20 est parallèle au grand axe 22C de la deuxième spire 22.

On peut également envisager que certaines spires du premier serpentin 16 présentent une première section de passage différente de la première section de passage d'autres spires formant le premier serpentin 16.

Dans le mode de réalisation de la figure 2, la portion de paroi en commun 24 est inclinée par rapport à la direction axiale A de 45°.

La portion de paroi en commun 24 présente une épaisseur E24 qui peut être différente de l'épaisseur E20E du reste de la paroi 20A, c'est-à-dire de la paroi d'échange 20E. En effet, le fluide circulant dans les première et deuxième spires 20, 22 étant le même, la pression exercée par le fluide de chaque côté de la portion de paroi en commun 24 est similaire. Aussi, il est possible de réduire l'épaisseur E20E de la paroi d'échange 20E à l'épaisseur E24 pour la portion de paroi en commun 24. De même, la paroi d'échange 22E de la deuxième spire 22 présente une épaisseur E22E qui est supérieure à l'épaisseur E24 de la paroi en commun 24. Dans le mode de réalisation de la figure 2, l'épaisseur E20E de la paroi d'échange 20E de la première spire 20 est égale à l'épaisseur E22E de la paroi d'échange 22E de la deuxième spire 22.

Le premier serpentin 16 peut être fabriqué par un procédé de fabrication additive sur lit de poudre. Lorsque le premier serpentin 16 est complètement fabriqué, la poudre résiduelle, c'est-à-dire la poudre qui n'a pas été fondue au moyen d'un faisceau laser, est aspirée et/ou expulsée de l'intérieur du premier serpentin 16 afin de vider le premier serpentin 16 de la poudre résiduelle qu'il contient.

Dans le mode de réalisation de la figure 2, la première section de passage 20B présente des parois d'échange 20E qui ont un périmètre supérieur au périmètre de parois d'échange d'une section présentant une forme de goutte, qui est une forme généralement utilisée en fabrication additive sur lit de poudre pour réaliser des cavités autoportées. En outre, à surface de section de passage constante et distance selon la direction axiale A constante du motif du serpentin, la dimension, dans le plan de coupe de la figure 2 mesurée selon une direction perpendiculaire à la direction axiale A, est inférieur pour le motif de la figure 2 que pour un motif en forme de goutte. Ainsi, à surface de section de passage constante et distance selon la direction axiale A constante du motif du serpentin, on augmente les surfaces d'échange entre le fluide circulant dans le serpentin et le fluide circulant autour du serpentin et on réduit l'encombrement selon une direction perpendiculaire à la direction axiale A du serpentin.

Par exemple, la première section de passage 20B du premier fluide dans le premier serpentin 16 peut présenter une surface de 365 mm² (millimètre carré). L'épaisseur E20E de la paroi d'échange 20E est égale à 1,5 mm et l'épaisseur E24 de la paroi en commun 24 est égale à 1,4 mm. La surface totale d'échange est d'environ 61,2 mm. Pour une section de passage en forme de goutte présentant une même section de passage, cette surface totale d'échange serait d'environ 54 mm.

La description réalisée pour le premier serpentin 16 s'applique au deuxième serpentin 18.

Les premier et deuxième serpentins 16, 18 peuvent être fabriqués en même temps par un procédé de fabrication additive sur lit de poudre, les enroulements du premier serpentin 16 étant imbriqués dans les enroulements du deuxième serpentin 18. Ainsi, grâce au procédé de fabrication additive, il est possible de fabriquer deux serpentins présentant des enroulements concentriques alternés, c'est-à-dire que deux enroulements du premier serpentin 16 peuvent être séparés par l'enroulement du deuxième serpentin 18 et/ou inversement.

L'utilisation d'un procédé de fabrication additive, en particulier de fabrication additive sur lit de poudre, permet une grande liberté de forme pour la réalisation du serpentin.

Dans ce qui suit, les éléments communs aux différents modes de réalisation sont identifiés par les mêmes références numériques.

Les figures 3A à 3E représentent d'autres modes de réalisation des serpentins. Sur les figures 3A à 3E, l'angle α formé entre la direction axiale A et la portion de paroi en commun 24 est égal à 45°.

La figure 3A est similaire à la figure 2. La deuxième section de passage 22B diffère de la section de passage de la figure 2 en ce que le rapport de la longueur du petit axe 22D sur la longueur du grand axe 22C est différente.

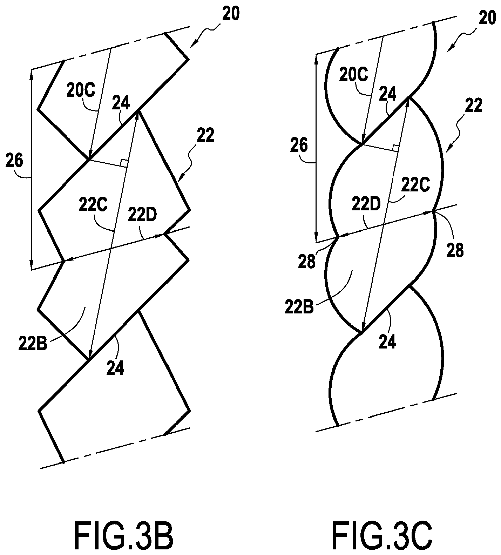

La figure 3B représente une section de passage 22B construite à partir d'une pluralité de segments rectilignes, la section de passage 22B formant un polygone concave.

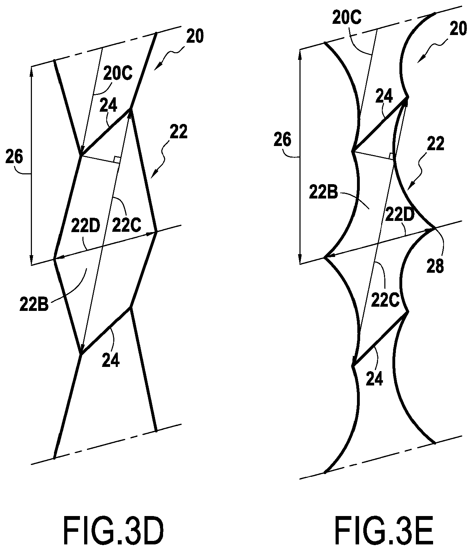

La figure 3D représente une section de passage 22B construite à partir d'une pluralité de segments rectilignes, la section de passage 22B formant un polygone convexe.

Les figures 3C et 3E représentent des sections de passage 22B comprenant des points de rebroussement 28, la figure 3C présentant des courbes convexes, lorsqu'elles sont vues de l'intérieur de la section de passage 22B et la figure 3E présentant des courbes concaves, lorsqu'elles sont vues de l'intérieur de la section de passage 22B.

Comme représenté sur les figures 3A à 3E, l'utilisation d'un procédé de fabrication additive, en particulier de fabrication additive sur lit de poudre, permet une grande liberté de forme pour la réalisation du serpentin. Les formes des sections de passage 22B peuvent être modifiées en fonction du débit du fluide passant dans le serpentin et à l'extérieur du serpentin et/ou en fonction du rapport de la surface des parois d'échange et de la surface de la section de passage, etc.

Quoique le présent exposé ait été décrit en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif. L'angle entre la direction axiale A et la portion de paroi en commun peut être différent de 45°.

## Revendications

1. Serpentin (16, 18) pour échangeur thermique, comprenant au moins une première spire (20) et une deuxième spire (22), les première et deuxième spires étant adjacentes, chaque spire (20, 22) présentant, dans un plan de coupe transverse au sens d'écoulement d'un fluide dans le serpentin, une paroi (20A, 22A) délimitant une section de passage (20B, 22B) du fluide dans la spire, la section de passage (20B, 22B) ayant une forme comprenant un grand axe (20C, 22C) et un petit axe (20D, 22D), **caractérisé en ce que** une projection orthogonale d'une extrémité du grand axe (20C) de la première spire (20A) sur une droite comprenant le grand axe (22C) de la deuxième spire (22) appartenant au grand axe (22C) de la deuxième spire (22), la première et la deuxième spire (20, 22) ayant une portion de paroi en commun (24), le grand axe étant défini comme un segment de droite reliant deux points de la section de passage les plus éloignés l'un de l'autre et le petit axe étant défini comme un segment de droite délimitant, dans deux spires adjacentes, un motif du serpentin, le motif du serpentin étant répété pour former les différentes spires.

2. Serpentin (16, 18) selon la revendication 1, dans lequel le grand axe (20C, 22C) des première et deuxième spires (20, 22) sont parallèles entre eux.

3. Serpentin (16, 18) selon la revendication 1 ou 2, dans lequel, dans le plan de coupe transverse au sens d'écoulement d'un fluide dans le serpentin, la portion de paroi en commun (24) entre les première et deuxième spires (20, 22) est inférieure ou égale à 30% de la paroi d'une spire, de préférence inférieure ou égale à 15% et supérieure ou égale à 5%, de préférence supérieure ou égale à 10%.

4. Serpentin (16, 18) selon la revendication 3, dans lequel la portion de paroi en commun (24) présente une épaisseur (E24) inférieure ou égale à une épaisseur (E20E, E22E) d'une paroi d'échange (20E, 22E), de préférence l'épaisseur (E24) de la portion de paroi en commun est supérieure ou égale à 30% de l'épaisseur (E20E, E22E) de la paroi d'échange, de préférence supérieure ou égale à 50%, de préférence supérieure ou égale à 70%, encore plus de préférence supérieure ou égale à 90%.

5. Serpentin (16, 18) selon la revendication 3 ou 4, dans lequel la portion de paroi en commun (24) est rectiligne.

6. Serpentin (16, 18) selon l'une quelconque des revendications 3 à 5, dans lequel la portion de paroi en commun (24) présente forme un angle (α) supérieur ou égal à 0°, de préférence supérieur ou égal à 10°, de préférence supérieur ou égal à 20°, de préférence supérieur ou égal à 30, encore plus de préférence supérieur ou égal à 40° et inférieur ou égal à 50°, de préférence inférieur ou égal à 45°.

7. Serpentin (16, 18) selon l'une quelconque des revendications 1 à 6, dans lequel la paroi présente au moins une surface d'échange comprenant au moins un point de rebroussement (28).

8. Serpentin (16, 18) selon l'une quelconque des revendications 1 à 7, dans lequel le serpentin comprend plusieurs enroulements concentriques.

9. Echappement de turbopompe (10) comprenant un serpentin (16, 18) selon l'une quelconque des revendications 1 à 8.

10. Procédé de fabrication d'un serpentin (16, 18) pour échangeur thermique selon l'une quelconque des revendications 1 à 8, le procédé étant un procédé de fabrication additive sur lit de poudre.

## Patentansprüche

1. Rohrschlange (16, 18) für einen Wärmetauscher, umfassend wenigstens eine erste Windung (20) und eine zweite Windung (22), wobei die erste und die zweite Windung benachbart sind, wobei jede Windung (20, 22) in einer Schnittebene quer zur Strömungsrichtung eines Fluids in der Rohrschlange eine Wand (20A, 22A) aufweist, die einen Durchlassquerschnitt (20B, 22B) des Fluids in der Windung begrenzt, wobei der Durchlassquerschnitt (20B, 22B) eine Form mit einer Hauptachse (20C, 22C) und einer Nebenachse (20D, 22D) aufweist, **dadurch gekennzeichnet, dass** eine orthogonale Projektion eines Endes der Hauptachse (20C) der ersten Windung (20A) auf eine Gerade, welche die Hauptachse (22C) der zweiten Windung (22) umfasst, zu der Hauptachse (22C) der zweiten Windung (22) gehört, wobei die erste und die zweite Windung (20, 22) einen gemeinsamen Wandabschnitt (24) aufweisen, wobei die Hauptachse als ein Geradensegment definiert ist, das zwei am weitesten voneinander entfernte Punkte des Durchlassquerschnitts verbindet, und wobei die Nebenachse als ein Geradensegment definiert ist, das in zwei benachbarten Windungen ein Muster der Rohrschlange begrenzt, wobei das Muster der Rohrschlange wiederholt wird, um die verschiedenen Windungen zu bilden.

2. Rohrschlange (16, 18) nach Anspruch 1, bei der die Hauptachse (20C, 22C) der ersten und der zweiten Windung (20, 22) zueinander parallel verlaufen.

3. Rohrschlange (16, 18) nach Anspruch 1 oder 2, bei der in der Schnittebene quer zur Strömungsrichtung eines Fluids in der Rohrschlange der gemeinsame Wandabschnitt (24) zwischen der ersten und der zweiten Windung (20, 22) kleiner als oder gleich 30 % der Wand einer Windung, vorzugsweise kleiner als oder gleich 15 % und größer als oder gleich 5 %, vorzugsweise größer als oder gleich 10 % ist.

4. Rohrschlange (16, 18) nach Anspruch 3, bei der der gemeinsame Wandabschnitt (24) eine Dicke (E24) aufweist, die kleiner als eine oder gleich einer Dicke (E20E, E22E) einer Austauschwand (20E, 22E) ist, vorzugsweise die Dicke (E24) des gemeinsamen Wandabschnitts größer als oder gleich 30 % der Dicke (E20E, E22E) der Austauschwand, vorzugsweise größer als oder gleich 50 %, vorzugsweise größer als oder gleich 70 %, noch bevorzugter größer als oder gleich 90 % ist.

5. Rohrschlange (16, 18) nach Anspruch 3 oder 4, bei der der gemeinsame Wandabschnitt (24) geradlinig ist.

6. Rohrschlange (16, 18) nach einem der Ansprüche 3 bis 5, bei der der gemeinsame Wandabschnitt (24) einen Winkel (α) bildet, der größer als oder gleich 0°, vorzugsweise größer als oder gleich 10°, vorzugsweise größer als oder gleich 20°, vorzugsweise größer als oder gleich 30, noch bevorzugter größer als oder gleich 40° und kleiner als oder gleich 50°, bevorzugt kleiner als oder gleich 45° ist.

7. Rohrschlange (16, 18) nach einem der Ansprüche 1 bis 6, bei der die Wand wenigstens eine Austauschfläche aufweist, die wenigstens einen Umkehrpunkt (28) umfasst.

8. Rohrschlange (16, 18) nach einem der Ansprüche 1 bis 7, bei der die Rohrschlange mehrere konzentrische Wicklungen umfasst.

9. Turbopumpenauslass (10), umfassend eine Rohrschlange (16, 18) nach einem der Ansprüche 1 bis 8.

10. Verfahren zur Herstellung einer Rohrschlange (16, 18) für einen Wärmetauscher nach einem der Ansprüche 1 bis 8, wobei das Verfahren ein additives Fertigungsverfahren auf einem Pulverbett ist.

## Claims

1. A coil (16, 18) for a heat exchanger, comprising at least a first turn (20) and a second turn (22), the first and second turns being adjacent, each turn (20, 22) having, in a cutting plane transverse to the direction of flow of a fluid in the coil, a wall (20A, 22A) delimiting a passage section (20B, 22B) of the fluid in the turn, the passage section (20B, 22B) having a shape comprising a major axis (20C, 22C) and a minor axis (20D, 22D), **characterized in that** an orthogonal projection of one end of the major axis (20C) of the first turn (20A) on a straight line comprising the major axis (22C) of the second turn (22) belonging to the major axis (22C) of the second turn (22), the first and second turns (20, 22) having a common wall portion (24), the major axis being defined as a straight segment connecting two points of the passage section furthest from each other and the minor axis being defined as a straight segment delimiting, in two adjacent turns, a pattern of the coil, the pattern of the coil being repeated to form the different turns.

2. The coil (16, 18) according to claim 1, wherein the major axes (20C, 22C) of the first and second turns (20, 22) are parallel to each other.

3. The coil (16, 18) according to claim 1 or 2, wherein, in the cutting plane transverse to the direction of flow of a fluid in the coil, the common wall portion (24) between the first and second turns (20, 22) is less than or equal to 30% of the wall of a turn, preferably less than or equal to 15% and greater than or equal to 5%, preferably greater than or equal to 10%.

4. The coil (16, 18) according to claim 3, wherein the common wall portion (24) has a thickness (E24) less than or equal to a thickness (E20E, E22E) of an exchange wall (20E, 22E), preferably the thickness (E24) of the common wall portion is greater than or equal to 30% of the thickness (E20E, E22E) of the exchange wall, preferably greater than or equal to 50%, preferably greater than or equal to 70%, even more preferably greater than or equal to 90%.

5. The coil (16, 18) according to claim 3 or 4, wherein the common wall portion (24) is rectilinear.

6. The coil (16, 18) according to any one of claims 3 to 5, wherein the common wall portion (24) forms an angle (*α*) greater than or equal to 0°, preferably greater than or equal to 10°, preferably greater than or equal to 20°, preferably greater than or equal to 30°, still more preferably greater than or equal to 40° and less than or equal to 50°, preferably less than or equal to 45°.

7. The coil (16, 18) according to any one of claims 1 to 6, wherein the wall has at least one exchange surface comprising at least one cusp (28).

8. The coil (16, 18) according to any one of claims 1 to 7, wherein the coil comprises a plurality of concentric windings.

9. A turbopump exhaust (10) comprising a coil (16, 18) according to any one of claims 1 to 8.

10. A method for manufacturing a coil (16, 18) for a heat exchanger according to any one of claims 1 to 8, the method being a powder bed additive manufacturing method.
